# EUROPÄISCHE PATENTSCHRIFT

(11) **EP 2 630 778 B1**
(45) Veröffentlichungstag und Bekanntmachung des Hinweises auf die Patenterteilung: **15.10.2014**
(21) Anmeldenummer: 11773716.3
(22) Anmeldetag: 19.10.2011
(51) Int. Cl.: H04M 1/247

(54) **VERFAHREN ZUR KONFIGURATION EINER ANORDNUNG MIT EINEM COMPUTERSYSTEM UND EINER TELEFONANLAGE SOWIE ANORDNUNG MIT EINEM COMPUTERSYSTEM UND EINER TELEFONANLAGE**
METHOD FOR CONFIGURING AN ARRANGEMENT HAVING A COMPUTER SYSTEM AND A TELEPHONE INSTALLATION AND ARRANGEMENT HAVING A COMPUTER SYSTEM AND A TELEPHONE INSTALLATION
PROCÉDÉ DE CONFIGURATION D'UN ENSEMBLE COMPRENANT UN SYSTÈME D'ORDINATEUR ET UNE INSTALLATION TÉLÉPHONIQUE AINSI QU'ENSEMBLE COMPRENANT UN SYSTÈME D'ORDINATEUR ET UNE INSTALLATION TÉLÉPHONIQUE

(30) Priorität: 21.10.2010 DE 102010049188
(43) Veröffentlichungstag der Anmeldung: 28.08.2013
(73) Patentinhaber: Fujitsu Technology Solutions Intellectual Property GmbH, 80807 München (DE)
(72) Erfinder: LINNE, Johannes, 86447 Todtenweis (DE); PFÄNDER, Maximilian, 86399 Bobingen (DE)
(74) Vertreter: Epping - Hermann - Fischer
(86) Internationale Anmeldenummer: PCT/EP2011/068270
(87) Internationale Veröffentlichungsnummer: WO 2012/052483

(56) Entgegenhaltungen:
- US-A1- 2008 144 793
- US-A1- 2008 175 358

## Beschreibung

Die Erfindung betrifft Verfahren zur Konfiguration einer Anordnung mit einem Computersystem und einer Telefonanlage, wobei das Computersystem über eine Datenschnittstelle mit der Telefonanlage verbunden ist und wobei das Computersystem und die Telefonanlage jeweils zumindest einen ersten und einen zweiten Betriebszustand einnehmen können.

Ferner betrifft die Erfindung eine Anordnung mit einem Computersystem und einer Telefonanlage, wobei das Computersystem über eine Datenschnittstelle mit der Telefonanlage verbunden ist.

US 2008/0144793 A1 und US 2008/0175358 A1 offenbaren ebenfalls solche Anordnungen.

Computersysteme und Telefonanlagen, insbesondere Arbeitsplatzrechner und Telefonapparate, werden getrennt voneinander verwaltet. Der Arbeitsplatzrechner ist beispielsweise mit unterschiedlichen Benutzerkonten konfiguriert oder als Clientsystem mit einem Hostsystem verbindbar oder verbunden, wobei auf dem Hostsystem unterschiedliche Benutzerkonten hinterlegt sind. Der Arbeitsplatzrechner kann derart konfiguriert sein, dass für jedes Benutzerkonto ein bestimmtes Erscheinungsbild der Anzeige, des sogenannten Desktops, oder ein vorbestimmter Zugriff auf Anwendungsprogramme oder Software vorgegeben wird. Ferner ist einstellbar, dass der Zugriff auf ein Benutzerkonto nur durch Eingabe gültiger Benutzerdaten (Login-Informationen mit Benutzername und Passwort) erfolgt. Ferner können Betriebszustände sowie ein Energiemanagement, beispielsweise ein Standby-Zustand nach vorbestimmter Zeit gemäß dem ACPI-Standard (ACPI = Advanced Configuration and Power Interface), vorgegeben werden.

Ein Telefon, insbesondere ein Telefonapparat einer Telefonanlage, kann beispielsweise konfiguriert werden, indem bestimmte Kurzwahltasten mit vorbestimmten Rufnummern belegt werden, ein bestimmter Klingelton ausgewählt wird und dessen Lautstärke sowie die Hörerlautstärke am Telefonapparat eingestellt werden. Ferner kann eine Rufweiterleitung, eine Programmierung von Nebenstellen sowie eine automatische Anrufbeantworter-Funktion oder eine Rufnummernliste eingegangener Anrufe konfiguriert werden.

Der Begriff Computersystem umfasst im Folgenden sämtliche Arten eines Computers, beispielsweise einen Desktop-PC, Thin Client, Server oder Host-Client-Systeme. Der Begriff Telefonanlage umfasst im Folgenden Telefone, Telefonapparate mit Telefon-Verwaltungssystem und Internettelefonie-fähige Telefone (sogenannte Voice over IP-Telefone). Computersysteme und Telefonanlagen beschreiben im Folgenden getrennte elektronische Anlagen, welche in separaten Gehäusen eingerichtet sind.

An einem Arbeitsplatz, zuhause oder in einer Büroumgebung, ist meist neben dem Arbeitsplatzrechner auch ein Telefonapparat vorhanden. Bei wechselnden Arbeitsplätzen oder beim Verlassen des Arbeitsplatzes verhalten sich Arbeitsplatzrechner und Telefonapparat unabhängig voneinander. Insbesondere beim Wechseln des Arbeitsplatzes von einem ersten Arbeitsplatz auf einen zweiten Arbeitsplatz ist neben dem An- und Abmelden an Benutzerkonten unterschiedlicher Arbeitsplatzrechner beispielsweise auch eine Rufumleitung von einem Telefonapparat am ersten Arbeitsplatz auf einen anderen Telefonapparat am zweiten Arbeitsplatz notwendig. Zudem steht am zweiten Arbeitsplatz nur ein "fremdes" Telefon zur Verfügung. Das bedeutet, dass das Telefon am zweiten Arbeitsplatz unter Umständen nicht gemäß den Anforderungen und Einstellungen des neuen Benutzers konfiguriert ist. So muss der Benutzer bei einem Arbeitsplatzwechsel jedes Mal Einstellungen an seinem gewohnten Telefonapparat abschalten und das Telefon am neuen Arbeitsplatz gemäß seinen Vorstellungen einstellen. Parameter, welche eingestellt werden, sind beispielsweise oben genannte Einstellungen am Telefonapparat.

Ein Arbeitsplatzwechsel ist daher bei gegenwärtigen IT-Systemen unkomfortabel und zeitaufwendig.

Daher besteht die Aufgabe darin, die Verwaltung eines Computersystems und einer Telefonanlage der eingangs genannten Art und insbesondere einen Arbeitsplatzwechsel eines Benutzers dieser beiden Geräte zu vereinfachen.

Die Aufgabe wird in einem ersten Aspekt durch ein Verfahren zur Konfiguration einer Anordnung mit einem Computersystem und einer Telefonanlage der genannten Art gelöst. Das Verfahren umfasst die Schritte Erzeugen von Steuerdaten durch eine Steuereinheit im Computersystem in Abhängigkeit von einem Betriebszustandswechsel des Computersystems vom ersten Betriebszustand in den zweiten Betriebszustand, Austausch der Steuerdaten zwischen dem Computersystem und der Telefonanlage über die Datenschnittstelle, Einrichten von einem oder mehreren Parametern für den zweiten Betriebszustand der Telefonanlage durch eine Konfigurationseinheit in der Telefonanlage in Abhängigkeit von den ausgetauschten Steuerdaten und Betriebszustandswechsel der Telefonanlage vom ersten Betriebszustand in den eingerichteten zweiten Betriebszustand.

Ein derartiges Verfahren ermöglicht die Konfiguration der Telefonanlage, welche automatisiert durch Steuerdaten des Computersystems ausgelöst und in Abhängigkeit des Inhalts der Steuerdaten durchgeführt wird. Die Steuerdaten werden erzeugt, wenn das Computersystem vom ersten Betriebszustand in den zweiten Betriebszustand wechselt. Somit kann durch eine Aktion im Computersystem ein Übertragen und Einrichten von personalisierten Einstellungen auf die dem Computersystem zugeordnete Telefonanlage durchgeführt werden. Die personalisierten Einstellungen können in der Telefonanlage übernommen werden, wobei die Telefonanlage vom ersten Betriebszustand in den eingerichteten und damit personalisierten zweiten Betriebszustand wechselt.

Diese Lösung hat den Vorteil, dass sowohl ein Betriebszustandwechsel des Computersystems mit einem automatisierten Betriebszustandswechsel der Telefonanlage verbunden werden kann als auch ausgelöst durch den Betriebszustandswechsel des Computersystems personalisierte Einstellungen, allgemein Parameter für einen zweiten Betriebszustand der Telefonanlage, auf die Telefonanlage übertragen und/oder dort eingestellt werden können.

Beispielsweise kann der Betriebszustandswechsel des Computersystems durch einen Benutzer ausgelöst werden, welcher auf das Computersystem zugreift. Dies löst die Konfiguration der Telefonanlage durch Übertragen von speziellen Steuerdaten auf die Telefonanlage und damit ein Einrichten von durch den Benutzer vorgegebenen Parametern in der Telefonanlage aus. Ein Benutzer kann somit durch eine einzige Aktion am Computersystem die separat voneinander eingerichteten Geräte Computersystem und Telefonanlage gemeinsam verwalten.

In einem weiteren Aspekt wird die Aufgabe durch ein weiteres Verfahren zur Konfiguration einer Anordnung mit einem Computersystem und einer Telefonanlage der genannten Art gelöst. Dieses Verfahren umfasst die Schritte Erzeugen von Steuerdaten durch eine Steuereinheit in der Telefonanlage in Abhängigkeit von einem Betriebszustandwechsel der Telefonanlage vom ersten Betriebszustand in den zweiten Betriebszustand, Austausch der Steuerdaten zwischen der Telefonanlage und dem Computersystem über die Datenschnittstelle, Einrichten von einem oder mehreren Parametern für den zweiten Betriebszustand des Computersystems durch eine Konfigurationseinheit im Computersystem in Abhängigkeit von den ausgetauschten Steuerdaten und Betriebszustandswechsel des Computersystems vom ersten Betriebszustand in den eingerichteten zweiten Betriebszustand.

Ein derartiges Verfahren beschreibt einen umgekehrten Fall zum obigen Verfahren. Bei diesem Verfahren erfolgt eine automatisierte Konfiguration des Computersystems in Abhängigkeit von Steuerdaten, welche dem Computersystem von der Telefonanlage mitgeteilt werden, nachdem die Telefonanlage vom ersten Betriebszustand in den zweiten Betriebszustand gewechselt ist. Somit wird durch eine Aktion in der Telefonanlage ein Einrichten und Übertragen von personalisierten Einstellungen auf das der Telefonanlage zugeordnete Computersystem ausgelöst und durchgeführt, wobei das Computersystem anschließend vom ersten Betriebszustand in den eingerichteten zweiten Betriebszustand wechselt. Der Betriebszustandswechsel der Telefonanlage kann durch eine Benutzeraktion ausgelöst werden, indem beispielsweise ein Benutzer zu seiner Authentifizierung eine Zahlenkennung am Telefonapparat eingibt. Anschließend kann dabei beispielsweise das Hochfahren des Computersystems in einen vom Benutzer vorgegebenen Betriebszustand oder der Zugriff auf ein vom Benutzer personalisiertes Benutzerkonto ausgelöst werden. Somit erfolgt auch bei diesem Verfahren das Verwalten von zwei separat eingerichteten Geräten Computersystem und Telefonanlage durch eine einzige Aktion in der Telefonanlage.

Die beiden erläuterten Verfahren ermöglichen eine komfortablere Verwaltung von getrennten elektronischen Geräten in einer Arbeitsplatzumgebung. Insbesondere ein Arbeitsplatzwechsel eines Benutzers kann dadurch einfacher gestaltet werden, da ein Benutzer an einem neuen Arbeitsplatz lediglich einen Betriebszustandswechsel durch eine Aktion an einem der Geräte auslösen muss, wobei automatisiert eine Konfiguration und insbesondere ein Übertragen personalisierter Einstellungen auf das zweite Gerät und ein Wechsel des zweiten Gerätes in dem zweiten Betriebszustand ausgelöst wird.

Vorzugsweise werden bei beiden genannten Verfahren Benutzerdaten und/oder Benutzeranweisungen von einer Eingabeeinheit im Computersystem oder der Telefonanlage eingelesen und deren Gültigkeit von einer Logikeinheit anhand gespeicherter Benutzerdaten oder programmierter Benutzeranweisungen im Computersystem oder der Telefonanlage geprüft. Das bedeutet, dass sich ein Benutzer Zugang zum Computersystem oder der Telefonanlage verschafft, in dem er sich durch bestimmte Benutzerdaten am Gerät authentifiziert und/oder spezielle Benutzeranweisungen, beispielsweise Anweisungen zu einem Betriebszustandswechsel, gibt. Die eingegebenen Daten werden anschließend auf ihre Gültigkeit hin geprüft, so dass ein Benutzer nur dann Zutritt zum Gerät erhält, wenn er dazu berechtigt ist, oder Anweisungen nur ausgeführt werden, wenn sie gültige und ausführbare Anweisungen darstellen. Dies erhöht den Zugriffsschutz auf die Geräte sowie deren Betriebssicherheit.

Die Benutzerdaten und/oder Benutzeranweisungen können jegliche Art personalisierter Zugriffsdaten oder Befehlsanweisungen umfassen. Bei dem Computersystem umfassen die Benutzerdaten insbesondere Login-Informationen, welche in der Regel passwortgeschützt sind. Bei der Telefonanlage umfassen die Benutzerdaten beispielsweise eine nur dem jeweiligen Benutzer bekannte Zahlenkombination oder Zahlenkennung, was einem sogenannten PIN-Zugriffsschutz (PIN = Personal Identification Number) entspricht. Bei modernen Telefonapparaten ist es jedoch auch möglich, bestimmte Wörter oder Wortgruppen über Tasteneingaben abzufragen, wobei jeder Taste ein oder mehrere Buchstaben des Alphabets zugeordnet sind. Im einfachsten Fall ist es jedoch auch möglich, durch Betätigen einer bestimmten Taste am Computersystem oder der Telefonanlage eine gültige Benutzeranweisung auszulösen.

Bevorzugt wird der Betriebszustandswechsel vom ersten in den zweiten Betriebszustand ausgelöst, wenn die eingelesenen Benutzerdaten und/oder Benutzeranweisungen von der Logikeinheit als gültig bewertet wurden. Dieser Aspekt kann sowohl den Betriebszustandswechsel des Computersystems als auch den Betriebszustandswechsel der Telefonanlage in beiden der genannten Verfahren betreffen. Somit ist es nicht nur für den Zugang zu einem der beiden Geräte erforderlich, dass ein Benutzer sich authentifiziert oder eine gültige Benutzeranweisung gibt. Eine korrekte Eingabe ist auch zur Durchführung des Betriebszustandswechsels notwendig.

Dies bedeutet, dass Steuerdaten zur automatisierten Konfiguration des jeweils anderen Gerätes lediglich erzeugt und über die Datenschnittstelle an das andere Gerät übertragen werden, falls sich ein Benutzer gültig authentifiziert hat und zusätzlich ein Betriebszustandswechsel des Gerätes ausgelöst wurde, auf das der Benutzer zugreift. Sind Benutzerdaten als ungültig bewertet worden, verbleiben beide Geräte oder zumindest das zu konfigurierende Gerät im ersten Betriebszustand, so dass zumindest eine automatisierte Konfiguration des zu konfigurierenden Gerätes nicht erfolgt. Beispielsweise verbleibt ein Telefonapparat in einem unkonfigurierten ersten Betriebszustand, falls ein Anmelden eines Benutzers auf dem Computersystem scheitert. Umgekehrt verbleibt ein Computersystem beispielsweise in einem Betriebszustand mit einem allgemeinen Anmeldebildschirm, falls der Zugriff eines Benutzers auf den Telefonapparat scheitert.

Vorzugsweise werden die Steuerdaten in Abhängigkeit von den eingelesenen Benutzerdaten und/oder Benutzeranweisungen erzeugt. Das bedeutet, dass die Steuerdaten nicht nur in Abhängigkeit eines Betriebszustandswechsels des Gerätes erzeugt werden, auf das der Benutzer zugreift. Die Steuerdaten sind auch abhängig vom Inhalt der eingelesenen Benutzerdaten. Somit werden für unterschiedliche Benutzer, welche unterschiedliche Benutzerdaten am Computersystem oder der Telefonanlage eingeben, auch unterschiedliche Steuerdaten erzeugt. Anhand individueller Steuerdaten können somit benutzerabhängige Einstellungen für Parameter im zu konfigurierenden Gerät vorgenommen werden. Das Computersystem oder die Telefonanlage erkennt dadurch, welcher Benutzer auf das Gerät zugreifen möchte, erzeugt entsprechende Steuerdaten, überträgt diese an das andere Gerät und löst somit eine für den Benutzer personalisierte Konfiguration des anderen Geräts aus.

Es ist denkbar, dass die Steuerdaten bereits personalisierte Einstellungen umfassen, welche an die Konfigurationseinheit des zu konfigurierenden Gerätes übertragen werden, so dass die Konfigurationseinheit diese Einstellungen lediglich programmieren muss. Es ist jedoch auch denkbar, dass die Steuerdaten lediglich Befehlsanweisungen umfassen, welche erst in der Konfigurationseinheit des zu konfigurierenden Gerätes interpretiert und daraus bestimmte Einstellungen in der Konfigurationseinheit erzeugt werden, welche eine entsprechende Programmierung des zu konfigurierenden Gerätes zur Folge haben. Beide Alternativen sind denkbar, hängen jedoch von der Ausführung des Computersystems und der Telefonanlage mit speziellen Logikeinheiten und Datenschnittstellen ab.

Die Parameter für den zweiten Betriebszustand der Telefonanlage umfassen bevorzugt wenigstens einen der folgenden Parameter: Energieverbrauch, Klingelton, Lautstärke, Belegung von Kurzwahltasten mit vorbestimmten Rufnummern, Rufweiterleitung, automatische Anrufbeantworter-Funktion sowie Anrufliste. Dies sind typische Parameter einer Telefonanlage, welche ein Benutzer individuell an seine Vorstellungen anpassen möchte. Bei einem Verfahren der genannten ersten Art können derartige eingestellte Parameter in eine neue Telefonanlage übernommen werden, falls ein Benutzer beispielsweise einen Zugriff auf ein Benutzerkonto an einem Computersystem auslöst, so dass das Computersystem die Konfiguration der Telefonanlage vornimmt. So kann ein Benutzer bequem seinen Arbeitsplatz wechseln und auf einen Arbeitsplatzrechner am neuen Arbeitsplatz zugreifen, wobei automatisiert sämtliche Einstellungen des Benutzers an der gewohnten Telefonanlage seines alten Arbeitsplatzes in der Telefonanlage am neuen Arbeitsplatz übernommen werden. Zeitaufwändiges Neueinrichten der Telefonanlage am neuen Arbeitsplatz entfällt.

Parameter für den zweiten Betriebszustand des Computersystems umfassen bevorzugt wenigstens einen der folgenden Parameter: Energieverbrauch, Zugriffsrechte auf gespeicherte Daten, Zugriffsrechte auf Datenschnittstellen, Ausführung von Anwendungsprogrammen, Erscheinungsbild einer Anzeige in einer Anzeigeeinheit des Computersystems und Audioausgabe einer Audioausgabeeinheit des Computersystems. Insbesondere bei Verfahren der genannten zweiten Art, kann ein Benutzer durch Zugriff auf eine Telefonanlage auf dem zugeordneten Computersystem persönliche Einstellungen übernehmen. So wird beispielsweise durch Zugriff auf die Telefonanlage das Computersystem hoch gefahren und ein entsprechendes personalisiertes Benutzerkonto am Computersystem geöffnet. Ein langwieriges Einstellen von Benutzervorgaben und ein separates Anmelden am Computersystem entfallen.

Vorzugsweise werden bei beiden Verfahren Geräteinformationen und/oder Informationen über den Aufstellungsort des Computersystems und der Telefonanlage über die Datenschnittstelle zwischen dem Computersystem und der Telefonanlage ausgetauscht. Die genannten Informationen können in den Steuerdaten enthalten sein oder separat übertragen werden.

Dabei ist es möglich, im Computersystem Geräteinformationen einer Telefonanlage und/oder in einer Telefonanlage Geräteinformationen des Computersystems zu hinterlegen, beispielsweise im Computersystem eine Identifikationsnummer der Telefonanlage und in der Telefonanlage eine MAC-Adresse (MAC = Media Access Control) oder eine sonstige Identifikationsnummer des Computersystems. Somit weiß jedes Computersystem, mit welcher Telefonanlage es Steuerdaten austauschen muss und umgekehrt weiß jede Telefonanlage, mit welchem Computersystem sie Steuerdaten austauschen muss.

Es ist jedoch auch möglich, dass in einem Computersystem und in einer zugehörigen Telefonanlage Informationen über den Aufstellungsort des Computersystems und der Telefonanlage, beispielsweise eine elektronisch hinterlegte Arbeitsplatznummer oder Raumnummer, hinterlegt sind. Auch so ist eine Zuordnung eines Computersystems zu einer Telefonanlage gewährleistet.

Diese Maßnahmen sind erforderlich, sodass zwei separate Geräte, ein Computersystem und eine Telefonanlage, einander zugeordnet werden können und elektrische Informationen in Form von Steuerdaten austauschen können. Insbesondere in Netzwerken, in denen das Computersystem beispielsweise ein oder mehrere Server als Hostsystem und ein oder mehrere Arbeitsplatzrechner als Clientsystem umfasst und die Telefonanlage ein oder mehrere Verwaltungssysteme und ein oder mehrere Telefonapparate umfasst, ist es notwendig über die genannten Informationen einen Arbeitsplatzrechner mit einem entsprechenden Telefonapparat zu verknüpfen. Meldet sich ein Benutzer beispielsweise an einem Arbeitsplatzrechner A an, so wird eine Geräteidentifikation A erzeugt und an einen Server übertragen. Im Server ist beispielsweise eine Zuordnungsliste gespeichert, in der der Server nach der Geräteidentifikation A sucht und eine Verknüpfung zu einem Telefonapparat B ermittelt. Steuerdaten zur Konfiguration des Telefonapparates B werden schließlich vom Server an ein Verwaltungssystem der Telefonanlage übertragen, welche die Steuerdaten an den Telefonapparat B weitergibt. Es ist jedoch auch möglich, dass eine derartige Zuordnungstabelle zur Zuordnung einer Geräteidentifikation A zum Telefonapparat B im Verwaltungssystem der Telefonanlage hinterlegt ist. In diesem Fall übergibt der Server des Computersystems die Geräteidentifikation A an das Verwaltungssystem der Telefonanlage, welches seinerseits die Zuordnung des Arbeitsplatzrechners A zum entsprechenden Telefonapparat B ermittelt.

In einem weiteren Aspekt wird die Aufgabe durch eine Anordnung mit einem Computersystem und einer Telefonanlage gelöst, wobei das Computersystem über eine Datenschnittstelle mit der Telefonanlage verbunden ist. Die Anordnung umfasst eine Steuereinheit zum Erzeugen von Steuerdaten in Abhängigkeit von einem Betriebszustandswechsel der Anordnung, eine Konfigurationseinheit zum Einrichten von einem oder mehreren Parametern in Abhängigkeit von den Steuerdaten, wobei die Konfigurationseinheit von der Steuereinheit angesteuert wird und wobei die Steuereinheit im Computersystem und die Konfigurationseinheit in der Telefonanlage angeordnet sind oder die Steuereinheit in der Telefonanlage und die Konfigurationseinheit im Computersystem angeordnet sind.

Eine derartige Anordnung ermöglicht das Konfigurieren eines der Geräte Computersystem und Telefonanlage in Abhängigkeit von Steuerdaten einer Steuereinheit, welche im anderen der Geräte Computersystem und Telefonanlage angeordnet ist. Das Erzeugen von Steuerdaten wird durch einen Betriebszustandswechsel, vorzugsweise des Gerätes, in dem die Steuereinheit sitzt, ausgelöst. Nach dem Konfigurieren des Gerätes, in dem die Konfigurationseinheit sitzt, kann auch dieses Gerät einen Betriebszustandswechsel mit eingerichteten Parametern durchführen. Die Anordnung erlaubt das Verwalten sowohl des Computersystems als auch der Telefonanlage durch Steuerdaten, welche durch eine Aktion in einem einzigen der Geräte ausgelöst und erzeugt wurden. Somit ist für einen Benutzer lediglich der Zugriff auf eines der Geräte erforderlich, um beide Geräte parallel verwalten zu können. Insbesondere ist vorteilhaft eines oder beide der genannten und erläuterten Verfahren durch eine derartige Anordnung durchführbar.

Bevorzugt umfasst das Computersystem zumindest ein Hostsystem und ein vom Hostsystem verwaltetes Clientsystem. Die Telefonanlage umfasst vorzugsweise zumindest ein Verwaltungssystem und zumindest einen vom Verwaltungssystem verwalteten Telefonapparat.

Nachfolgend wird der Gegenstand anhand mehrerer Ausführungsbeispiele in Zeichnungen näher erläutert.

Es zeigen:
Figur 1 ein erstes Ausführungsbeispiel einer Anordnung mit einem Computersystem und einer Telefonanlage,
Figur 2 ein zweites Ausführungsbeispiel einer Anordnung mit einem Computersystem und einer Telefonanlage,
Figur 3 ein drittes Ausführungsbeispiel einer Anordnung mit einem Computersystem und einer Telefonanlage,
Figur 4 ein viertes Ausführungsbeispiel einer Anordnung mit einem Computersystem und einer Telefonanlage und
Figur 5 ein schematisiertes Ablaufdiagramm eines Verfahrens zur Konfiguration eines Computersystems und einer Telefonanlage.

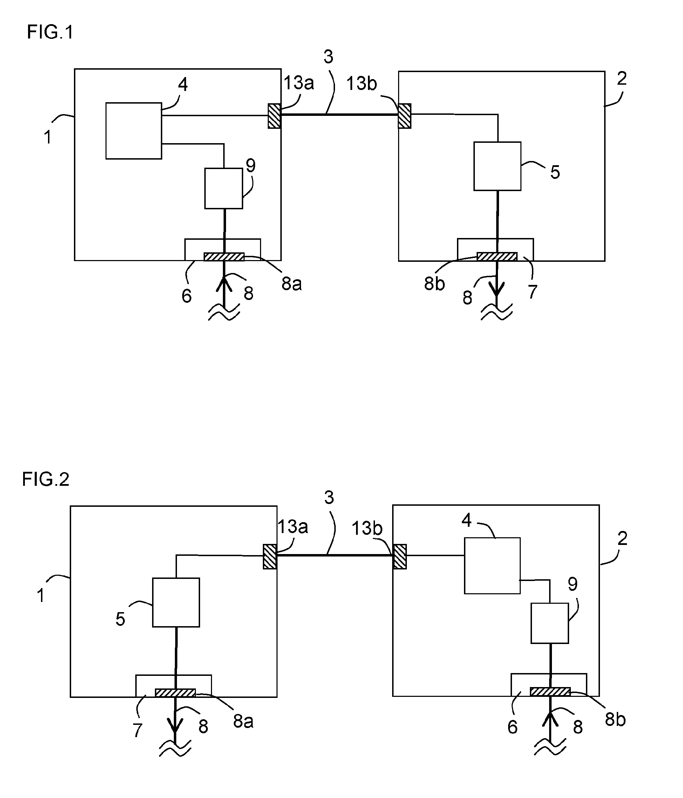

Figur 1 zeigt eine erste Ausführungsform einer Anordnung mit einem Computersystem 1 und einer Telefonanlage 2. Das Computersystem 1 ist über eine Datenschnittstelle 3 mit der Telefonanlage 2 verbunden, wobei das Computersystem einen Schnittstellenanschluss 13a und die Telefonanlage 2 einen Schnittstellenanschluss 13b zum Verbinden der beiden Geräte über die Datenschnittstelle 3 aufweisen. Über die Datenschnittstelle 3 können Daten bidirektional zwischen dem Computersystem 1 und der Telefonanlage 2 ausgetauscht werden. Es ist jedoch auch möglich, lediglich einen unidirektionalen Austausch, in diesem Ausführungsbeispiel vom Computersystem 1 zur Telefonanlage 2, einzurichten.

Das Computersystem 1 ist beispielsweise ein Arbeitsplatzrechner wie ein Desktoprechner oder ein Notebook. Die Telefonanlage ist beispielsweise ein herkömmlicher Telefonapparat, aufweisend einen Hörer oder Headset, einen Ziffern- und Zeichenblock sowie Funktionstasten mit vorbelegten Funktionen, sowie ein Display.

Das Computersystem 1 weist eine Eingabeeinheit 6 zum Einlesen von in das Computersystem 1 eingegebenen Daten (siehe Pfeil) auf. Hierzu weist die Eingabeeinheit 6 eine Input-Output-Schnittstelle, kurz I/O-Schnittstelle 8 mit Schnittstellenanschlüssen 18a auf. Die Eingabeeinheit 6 ist beispielsweise eine Tastatur, eine Maus, ein berührungsempfindliches Display, eine Spracheingabeschnittstelle oder jegliche andere denkbare Mensch-Maschine-Kommunikationsschnittstelle. Über die Eingabeeinheit 6 können folglich Informationen und Daten in das Computersystem 1 eingelesen werden. Diese Daten umfassen beispielsweise Benutzerdaten oder Benutzeranweisungen. Die Daten werden von der Logikeinheit 9 eingelesen und beispielsweise mit gespeicherten Benutzerdaten oder programmierten Benutzeranweisungen verglichen. Ein positiver Vergleich bedeutet, dass die eingegebenen Daten gültig sind.

Falls die Daten gültig sind, erzeugt die Logikeinheit 9 entsprechende Signale, welche an eine Steuereinheit 4 weitergeleitet werden. Die Steuereinheit 4 interpretiert die Signale und erzeugt in Abhängigkeit von den eingelesenen Benutzerdaten oder Benutzeranweisungen Steuerdaten. Diese Steuerdaten sind für unterschiedliche Benutzerdaten oder Benutzeranweisungen ebenfalls unterschiedlich. Die Steuerdaten können jedoch auch einen zumindest teilweise identischen Informationsgehalt in Abhängigkeit von Benutzerdaten oder Benutzeranweisungen aufweisen. Die Steuerdaten werden schließlich am Schnittstellenanschluss 13a des Computersystems 1 bereitgestellt.

Zur Übertragung der Steuerdaten von Computersystem 1 an die Telefonanlage 2 wird die Datenschnittstelle 3 herangezogen. Die Steuerdaten werden über den Schnittstellenanschluss 13b von der Telefonanlage 2 empfangen und an eine Konfigurationseinheit 5 weitergeleitet. In der Konfigurationseinheit 5 werden die Steuerdaten interpretiert und lösen das Einstellen von Parametern aus, so dass individuelle Einstellungen in Abhängigkeit der am Computersystem 1 eingegebenen Benutzerdaten oder Benutzeranweisungen in der Telefonanlage 2 übernommen werden können. Die Konfigurationseinheit 5 programmiert bestimmte Parameter, beispielsweise den Energieverbrauch, Klingeltöne, Lautstärke, Belegung von Kurzwahltasten mit vorbestimmten Rufnummern, eine Programmierung von Nebenstellen oder eine unter Umständen zeitgesteuerte Rufweiterleitung oder automatische Anrufbeantworter-Funktion.

Die eingestellten Parameter haben auch Auswirkungen auf ausgegebene Daten (siehe Pfeil) an einer Ausgabeeinheit 7 der Telefonanlage 2 mit einem Schnittstellenanschluss 18b für eine I/O-Schnittstelle 8 der Telefonanlage 2. Die Ausgabeeinheit 7 ist beispielsweise ein Display, ein Lautsprecher, LED-Anzeigen oder sonstiges. Die I/O-Schnittstelle 8 der Telefonanlage 2 kann dabei jegliche Mensch-Maschine-Kommunikationsschnittstelle mit Schnittstellenanschlüssen 18b darstellen, beispielsweise einen Hörer, ein Headset, Tasten mit vorbestimmten Funktion, ein oder mehrere Drehwahlräder, ein berührungsempfindliches Display, eine Kamera für Videotelefonie, ein Spracherkennungssystem oder ähnliches.

Durch eine derartige Anordnung ist es schließlich möglich, durch Benutzereingaben oder Benutzeranweisungen am Computersystem 1 einen Betriebszustandswechsel des Computersystems 1 von einem ersten Betriebszustand in einen zweiten Betriebszustand auszulösen, wobei benutzerabhängige Steuerdaten erzeugt und über die Datenschnittstelle 3 an die Telefonanlage 2 weitergegeben werden. Die Telefonanlage 2 wird daraufhin entsprechend konfiguriert und wechselt ebenfalls von einem ersten Betriebszustand in den eingestellten zweiten Betriebszustand. Es ist denkbar, dass Einstellungen für Parameter der Telefonanlage bereits im Computersystem 1 definiert werden und über die Steuerdaten entsprechende Steuerbefehle an die Telefonanlage 2 weitergegeben werden, welche in der Konfigurationseinheit 5 der Telefonanlage 2 lediglich ausgeführt werden müssen. Es ist jedoch auch denkbar, dass im Computersystem 1 lediglich benutzerabhängige Steuerdaten erzeugt werden, welche erst durch die Konfigurationseinheit 5 der Telefonanlage 2 verarbeitet und mit entsprechenden Einstellungen verknüpft werden, welche anschließend programmiert werden.

Es müssen lediglich Zuordnungsinformationen zwischen dem Computersystem 1 und der Telefonanlage 2 in einem oder beiden Geräten 1 und 2 hinterlegt sein, so dass eine örtliche oder geräteabhängige Zuordnung zwischen dem Computersystem 1 und der Telefonanlage 2 ermöglicht ist. Somit kann durch eine Benutzeraktion am Computersystem 1 sowohl das Computersystem 1 als auch die Telefonanlage 2 konfiguriert und verwaltet werden. Ein Benutzer muss keine aufwendigen und zeitraubenden Einstellungen an beiden Geräten 1 und 2 vornehmen. Insbesondere bei einem Arbeitsplatzwechsel können dabei personalisierte Einstellungen, insbesondere der Telefonanlage 2 lediglich durch An- und Abmelden eines Benutzers am Computersystem 1 auf eine neue Telefonanlage 2 übernommen werden.

Figur 2 zeigt ein zweites Ausführungsbeispiel einer Anordnung mit einem Computersystem 1 und einer Telefonanlage 2. Der Unterschied zur Ausführungsform gemäß Figur 1 besteht jedoch darin, dass wesentliche Komponenten zum Austausch von Steuerdaten und zur Konfiguration eines entsprechenden Gerätes im Vergleich zur Ausführungsform der Figur 1 vertauscht in den Geräten 1 und 2 angeordnet sind. So weist nun die Telefonanlage 2 eine Eingabeeinheit 6 mit einer entsprechenden I/O-Schnittstelle 8 sowie eine Logikeinheit 9 zum Überprüfen der Gültigkeit der Eingabedaten und eine Steuereinheit 4 zum Erzeugen von Steuerdaten auf. Diese Steuerdaten werden über den Schnittstellenanschluss 13b und die Datenschnittstelle 3 an den Schnittstellenanschluss 13a des Computersystems 1 weitergegeben. Das Computersystem 1 weist eine Konfigurationseinheit 5 zum Interpretieren der Steuerdaten und zum Einrichten entsprechender Parameter auf, welche unter anderem eine Ausgabeeinheit 7 mit einer entsprechenden I/O-Schnittstelle 8 und Schnittstellenanschlüssen 18a beeinflussen.

Somit ist gemäß dieser Ausführungsform über erzeugte Steuerdaten in der Telefonanlage 2 eine Konfiguration des Computersystems 1 automatisiert realisierbar. Beispielsweise kann ein Benutzer an der Telefonanlage 2 über die Eingabeeinheit 6 eine bestimmte Benutzeranweisung oder bestimmte Benutzerdaten eingeben, beispielsweise in Form einer Zahlenkennung, wobei personalisierte Steuerdaten in der Steuereinheit 4 erzeugt werden, welche Einstellung für ein vorgegebenes Benutzerkonto des Benutzers im Computersystem 1 festlegen. Anschließend wird der Benutzer automatisiert an seinem Benutzerkonto im Computersystem 1 angemeldet. Somit stehen dem Benutzer nach einer Autorisierung an der Telefonanlage 2 auch sämtliche personalisierten Einstellungen am Computersystem 1 zur Verfügung.

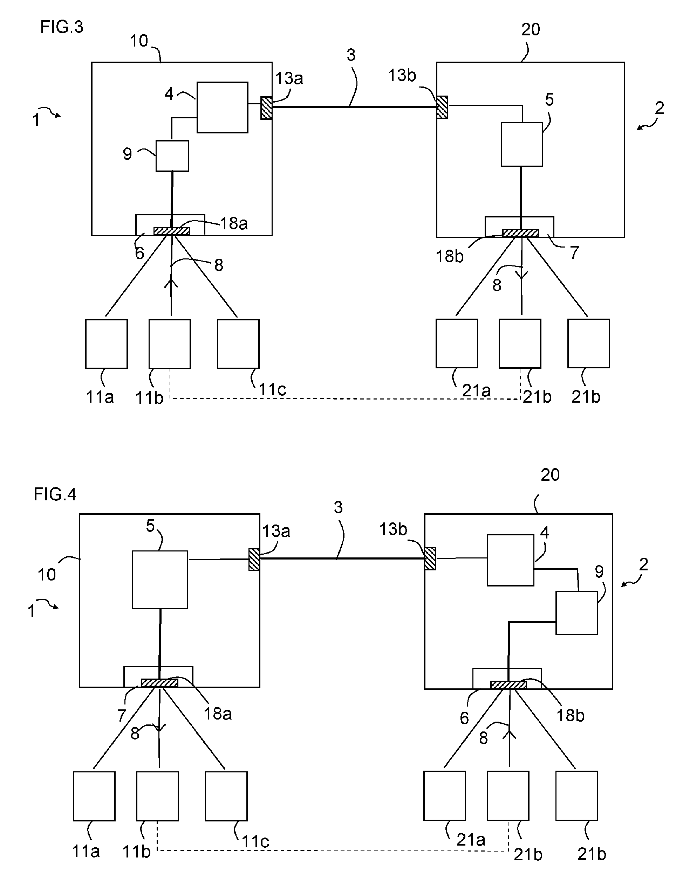

Figur 3 zeigt eine weitere Ausführungsform eines Computersystems 1 und einer Telefonanlage 2, wobei das Computersystem 1 in dieser Ausführung ein Hostsystem 10 mit sämtlichen Komponenten des Computersystems 1 aus Figur 1 und an das Hostsystem 10 angeschlossene Clientsysteme 11a, 11b, 11c aufweist. Zum Anschluss der Clientsysteme 11a, 11b, 11c an das Hostsystem 10 dienen die Schnittstellenanschlüsse 18a des Computersystems 1, welche in einer Eingabeeinheit 6 am Hostsystem 10 eingerichtet sind. Über das Hostsystem können die einzelnen Clientsysteme 11a, 11b, 11c angesprochen, gesteuert und verwaltet werden. Eine Netzwerkverbindung wird beispielsweise über ein lokales Netzwerk (LAN = Local Area Network) aufgebaut.

Die Telefonanlage 2 weist in dieser Ausführung ein Verwaltungssystem 20 mit sämtlichen Komponenten der Telefonanlage 2 aus Figur 1 auf, wobei an das Verwaltungssystem 20 mehrere Telefonapparate 21a, 21b, 21c angeschlossen sind. Zum Anschluss der Telefonapparate 21a, 21b, 21c an das Verwaltungssystem 20 dienen Schnittstellenanschlüsse 18b der Telefonanlage 2, welche in einer Ausgabeeinheit 7 am Verwaltungssystem 20 eingerichtet sind. Das Verwaltungssystem 20 vermittelt Anrufe an einzelne Telefonapparate 21a, 21b, 21c und organisiert die Verteilung von Nebenstellen und Durchwahlen. Das Verwaltungssystem 20 ist beispielsweise eine Telefonanlage vom Typ Hicom oder HiPath der Firma Siemens.

An einem Arbeitsplatz steht eines der Clientsysteme 11a, 11b, 11c und einer der Telefonapparate 21a, 21b, 21c zur Verfügung. Beispielsweise sind das Clientsystem 11b und der Telefonapparat 21b an einem Arbeitsplatz untergebracht. Diese örtliche Relation ist über eine gestrichelte Verbindung zwischen den beiden Geräten in Figur 3 schematisiert dargestellt. Wenn sich ein Benutzer an dem Clientsystem 11b einloggt, so werden Benutzerdaten und/oder Benutzeranweisungen über die Eingabeeinheit 6 in das Hostsystem 10 eingelesen und gemäß dem in Figur 1 erläuterten Verfahren in Steuerdaten umgewandelt, welche über die Datenschnittstelle 3 an das Verwaltungssystem 20 der Telefonanlage 2 weitergegeben werden. Die Konfigurationseinheit 5 des Verwaltungssystems 20 erzeugt nun Einstellungen für Parameter und erhält Zuordnungsinformationen, also Identifikationsinformationen des Clientsystems 11b, an dem ein Benutzer eine Aktion gestartet hat. Die Konfigurationseinheit 5 im Verwaltungssystem 20 und/oder die Steuereinheit 4 im Hostsystem 10 vergleichen Zuordnungsinformationen des Clientsystems 11b mit Zuordnungsinformationen aller Telefonapparate 21a, 21b, 21c der Telefonanlage 2. Das Clientsystem 11b wird entsprechend, beispielsweise durch Vergleich der Daten aus einer Look-up-Tabelle, dem Telefonapparat 21b zugeordnet.

Anschließend können eingestellte Parameter über die Konfigurationseinheit 5 und die Ausgabeeinheit 7 an den Telefonapparat 21b weitergegeben werden. Somit wird der Telefonapparat 21b entsprechen den Einstellungen aus der Konfigurationseinheit 5 programmiert.

Je nach Ausführung der Anordnung können Einstellungen für Parameter bereits in der Steuereinheit 4 des Hostsystems 10 vorgegeben werden und diese Einstellungen an die Konfigurationseinheit 5 des Verwaltungssystems 20 weitergegeben werden, wobei die Konfigurationseinheit 5 lediglich diese Einstellungen im Telefonapparat 21b programmieren muss. Es ist jedoch auch denkbar, dass die Steuereinheit 4 des Hostsystems 10 lediglich Informationen über das Clientsystem 11b erzeugt und eine Verarbeitung dieser Informationen in der Konfigurationseinheit 5 des Verwaltungssystems 20 durchgeführt wird, wobei erst in der Konfigurationseinheit 5 Einstellungen für Parameter festgelegt und durchgeführt werden.

Figur 4 zeigt eine weitere Ausführungsform einer Anordnung mit einem Computersystem 1 und einer Telefonanlage 2, welche gemäß Figur 3 als Host-/Client-Systeme beziehungsweise Verwaltungssysteme mit angeschlossenen Telefonapparaten ausgeführt sind, jedoch das Hostsystem 10 beziehungsweise das Verwaltungssystem 20 in ihrer Funktionalität gemäß Figur 2 eingerichtet sind. Dabei sind wie in Figur 3 das Clientsystem 11b und der Telefonapparat 21b an einem Ort gemeinsam zu verwalten. Hierbei wird jedoch eine Konfiguration des Clientsystems 11b durchgeführt, in dem aufgrund einer Benutzereingabe am Telefonapparat 21b über eine Logikeinheit 9 und über eine Steuereinheit 4 Steuerdaten erzeugt und an die Konfigurationseinheit 5 des Hostsystems 10 weitergegeben werden. Die Konfigurationseinheit 5 erstellt gemäß der vorgenannten Art und Weise Einstellungen für Parameter, so dass das Clientsystem 11b über personalisierte Einstellungen eingerichtet werden kann. Entsprechende Erläuterungen hierzu sind den äquivalenten Erläuterungen aus Figur 2 zu entnehmen.

Es ist auch denkbar, Mischformen der Ausführungsbeispiele aus den Figuren 1 bis 4 zu erzeugen. So könnte beispielsweise ein Computersystem 1 ein einzelner Arbeitsplatzrechner sein, welcher an einem Arbeitsplatz gemeinsam mit einem Telefonapparat einer Telefonanlage 2, umfassend ein Verwaltungssystem 20 und mehrere Telefonapparate 21a, 21b, 21c eingerichtet ist. Umgekehrt wäre denkbar, einen einzelnen Telefonapparat mit einem Clientsystem aus einer Gruppe von Clientsystemen 11a, 11b, 11c zu verknüpfen, welche über ein Hostsystem 10 verwaltet werden.

Je nach Ausführung der Geräte ist auch die Datenschnittstelle 3 entsprechend anzupassen. So wäre es beispielsweise denkbar, eine Datenschnittstelle 3 gemäß den Ausführungsformen aus Figur 3 und Figur 4 auch zwischen den einzelnen Geräten 11a, 11b, 11c und 21a, 21b, 21c vorzusehen. Dabei wird ein Clientsystem 11a, 11b, 11c über ein Hostsystem 10 verwaltet und ein Telefonapparat 21a, 21b, 21c über ein Verwaltungssystem 20 verwaltet, jedoch kann ein Datenaustausch von Steuerdaten direkt zwischen den einzelnen Geräten 11a, 11b, 11c und 21a, 21b, 21c stattfinden. Es ist auch möglich, eine Datenschnittstelle 3 zwischen einem Hostsystem 10 und einem Telefonapparat 21a, 21b, 21c oder zwischen dem Verwaltungssystem 20 und einem Clientsystem 11a, 11b, 11c vorzusehen.

Eine Ausführung einer Telefonanlage 2 gemäß den Figuren 3 und 4 ist beispielsweise sinnvoll, falls es sich bei Telefonapparaten 21a, 21b, 21c um Internettelefonie-fähige Telefone handelt, welche über eine Netzwerkverbindung miteinander verbunden sind. Stellen die Telefonapparate 21a, 21b, 21c jedoch herkömmliche analoge Telefonapparate dar, so kann eine Datenverbindung 3 zur Konfiguration der Telefonapparate 21a, 21b, 21c auch von einem Hostsystem 10 oder einem Clientsystem 11a, 11b, 11c direkt zu den Telefonapparaten 21a, 21b, 21c führen, falls die Telefonapparate 21a, 21b, 21c nicht oder nur eingeschränkt über ein Verwaltungssystem 20 verwaltet werden. Hierbei ist es unter Umständen denkbar, sämtliche personalisierten Einstellungen eines Telefonapparates 21a, 21b, 21c im Computersystem 1 durchzuführen und diese Einstellungen lediglich über die Datenschnittstelle 3 an den jeweiligen Telefonapparat 21a, 21b, 21c zu übertragen.

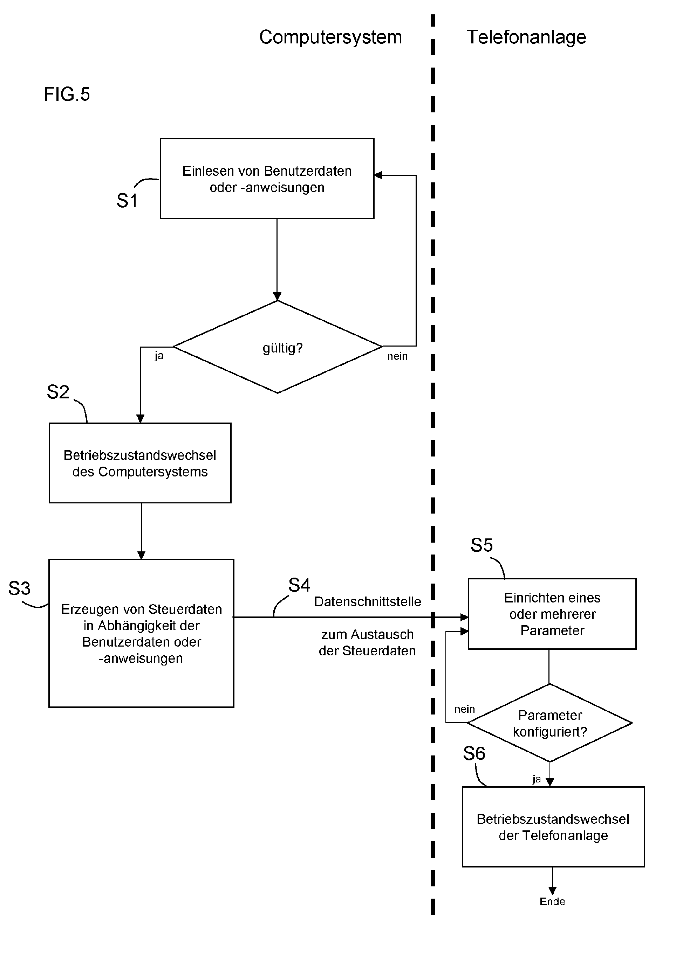

Figur 5 zeigt ein schematisiertes Ablaufdiagramm eines Verfahrens zur Konfiguration eines Computersystems 1 und einer Telefonanlage 2. Beispielhaft sei das Verfahren angegeben, in dem eine Telefonanlage durch Benutzereingaben an einem Computersystem automatisiert konfiguriert werden kann.

In einem ersten Schritt S1 werden Benutzerdaten oder Benutzeranweisungen eingelesen, welche im Computersystem 1 von einem Benutzer eingegeben werden. Weiterhin wird überprüft ob diese eingegebenen Benutzerdaten oder Benutzeranweisungen gültig sind. Ist dies nicht der Fall, so wird zum Schritt S1 zurückgekehrt und Eingaben von weiteren oder neuen Benutzerdaten oder Benutzeranweisungen erwartet. Falls die Daten jedoch gültig sind, so wird davon ausgegangen, dass sich ein Benutzer authentifizieren konnte und Zugriff auf das Computersystem hat. Daraufhin wird zum Schritt S2 gewechselt, woraufhin ein Betriebszustandswechsel des Computersystems durchgeführt wird, beispielsweise nach erfolgreichem Anmelden des Benutzers an einem Benutzerkonto des Computersystems. Ein Betriebszustandswechsel kann beispielsweise das Hochfahren des Computersystems aus einem ausgeschalteten oder einem Standby-Zustand beschreiben. Es ist jedoch auch der umgekehrte Fall möglich, bei dem ein Benutzer Benutzeranweisungen zum Abschalten und Herunterfahren des Computersystems gegeben hat. Ein Betriebszustandswechsel ist auch denkbar beim Übergang von einem Betriebszustand mit hohem Energieverbrauch in einen Betriebszustand mit niedrigerem Energieverbrauch oder umgekehrt.

Nach dem Betriebszustandswechsel werden im Schritt S3 Steuerdaten in Abhängigkeit der Benutzerdaten oder der Benutzeranweisungen erzeugt. Die Steuerdaten enthalten Anweisungen für eine Konfiguration der Telefonanlage gemäß personalisierten Einstellungen des Benutzers, welcher sich in Schritt S1 am Computersystem angemeldet hat.

In Schritt S4 werden die Steuerdaten über die Datenschnittstelle an die Telefonanlage weitergegeben. Die Steuerdaten werden in Schritt S5 beispielsweise über eine Konfigurationseinheit interpretiert, wobei anschließend einer oder mehrere Parameter für eine Konfiguration der Telefonanlage eingerichtet werden. Ferner wird überprüft ob die Parameter fertig konfiguriert sind. Ist dies nicht der Fall, so wird der Schritt S5 fortgesetzt, bis alle Parameter konfiguriert sind. Anschließend erfolgt eine mögliche Programmierung der Telefonanlage mit den neu eingerichteten Parametern gemäß den personalisierten Einstellungen eines Benutzers und ein Betriebszustandswechsel der Telefonanlage von einem ersten Betriebszustand in den zweiten voreingestellten Betriebszustand gemäß Schritt S6.

Anschließend ist auch die Telefonanlage im zweiten Betriebszustand, wobei sämtliche personalisierten Einstellungen eines Benutzers, welcher sich am Computersystem 1 eingeloggt hat, auf die Telefonanlage übertragen wurden. Somit kann ein Benutzer, insbesondere bei Arbeitsplatzwechsel, einfach und einzig durch Aktionen am Computersystem auch die zugehörige Telefonanlage entsprechend konfigurieren. Das Verfahren ist somit abgeschlossen.

In allen Ausführungsformen stellen die Komponenten 4 und 5 sowie 9 entweder Logikschaltkreise oder Computerprogramme dar. Logikschaltkreise können beispielsweise in Form von Mikrocontrollern oder sogenannten Field Programmable Gate Arrays (FPGA) ausgeführt sein. Computerprogramme können beispielsweise Programmcode einer Programmiersprache wie C, C++, Java oder ähnliches oder Assemblercode darstellen.

Der Begriff Betriebszustandswechsel betrifft sämtliche Änderungen eines Betriebszustands in einem Computersystem 1 oder einer Telefonanlage 2, wobei insbesondere beim Computersystem 1 Wechsel von Energiesparzuständen in Verbindung mit Zugriff auf ein bestimmtes Benutzerkonto und damit verknüpfte Zugriffsrechte im Computersystem beschrieben sind. In der Telefonanlage 2 sind dabei sämtliche Wechsel von Energiesparzuständen unter Umständen in Verbindung mit einer Einstellung bestimmter Parameter, wie Rufumleitung oder Anrufbeantworter-Funktion oder Stummschalten des Telefons umfasst. So könnte beispielsweise ein Telefonapparat einer Telefonanlage 2 in einen Stromsparmodus geschaltet werden, wenn das zugehörige Computersystem 1 durch einen Benutzer über entsprechende Anweisungen in einen Sparzustand gebracht wird. Umgekehrt könnte ein Telefonapparat einer Telefonanlage 2 aufgeweckt werden, wenn sich ein Benutzer am zugehörigen Computersystem 1 einloggt. In entsprechender Weise werden weitere Einstellungen der vorgenannten und explizit erläuterten Art an beiden Geräten vorgenommen.

Ferner ist es denkbar, sowohl das Computersystem als auch die Telefonanlage derart einzurichten, dass bestimmte Grundfunktionen oder Notfallfunktionen auch ohne automatisierte Konfiguration gemäß den Verfahren der genannten Art durchführbar sind. So wäre denkbar, dass man von einem Telefonapparat dennoch telefonieren kann oder dass ein Computersystem einen allgemeinen Betriebszustand mit Grundfunktionen besitzt. Somit sind beide Geräte auch ohne Konfiguration und unabhängig von einer Aktion am anderen Gerät zumindest in nichtkonfigurierter Art und mit eingeschränkten Grundfunktionen benutzbar.

### Bezugszeichenliste

- 1: Computersystem
- 2: Telefonanlage
- 3: Datenschnittstelle
- 4: Steuereinheit
- 5: Konfigurationseinheit
- 6: Eingabeeinheit
- 7: Ausgabeeinheit
- 8: I/O-Schnittstelle
- 9: Logikeinheit
- 10: Hostsystem
- 11a, 11b, 11c: Clientsystem
- 13a, 13b: Schnittstellenanschlüsse
- 18a, 18b: Schnittstellenanschlüsse
- 20: Verwaltungssystem
- 21a, 21b, 21c: Telefonapparat
- S1 bis S6: Verfahrensschritte

## Patentansprüche

1. Verfahren zur Konfiguration einer Anordnung mit einem Computersystem (1) und einer Telefonanlage (2), wobei das Computersystem (1) über eine Datenschnittstelle (3) mit der Telefonanlage (2) verbunden ist und wobei das Computersystem (1) und die Telefonanlage (2) jeweils zumindest einen ersten und einen zweiten Betriebszustand einnehmen können,
umfassend die Schritte:
- Einlesen von Benutzerdaten durch eine Eingabeeinheit (6) im Computersystem (1), wobei die Benutzerdaten personalisierte Zugriffsdaten eines Benutzers umfassen,
- Prüfen der Gültigkeit der Benutzerdaten durch eine Logikeinheit (9) anhand gespeicherter Benutzerdaten im Computersystem (1),
- Auslösen eines Betriebszustandswechsels des Computersystems (1) vom ersten in den zweiten Betriebszustand, wenn die eingelesenen Benutzerdaten von der Logikeinheit (9) als gültig bewertet werden,
- Erzeugen von Steuerdaten durch eine Steuereinheit (4) im Computersystem (1) in Abhängigkeit vom Betriebszustandswechsel des Computersystems (1) vom ersten Betriebszustand in den zweiten Betriebszustand, wobei die Steuerdaten personalisierte Einstellungen oder Befehlsanweisungen für personalisierte Einstellungen der Telefonanlage (2) umfassen,
- Austausch der Steuerdaten zwischen dem Computersystem (1) und der Telefonanlage (2) über die Datenschnittstelle (3),
- Einrichten von einem oder mehreren Parametern für den zweiten Betriebszustand der Telefonanlage (2) durch eine Konfigurationseinheit (5) in der Telefonanlage (2) in Abhängigkeit von den ausgetauschten Steuerdaten,
- Betriebszustandswechsel der Telefonanlage (2) vom ersten Betriebszustand in den eingerichteten zweiten Betriebszustand.

2. Verfahren zur Konfiguration einer Anordnung mit einem Computersystem (1) und einer Telefonanlage (2), wobei das Computersystem (1) über eine Datenschnittstelle (3) mit der Telefonanlage (2) verbunden ist und wobei das Computersystem (1) und die Telefonanlage (2) jeweils zumindest einen ersten und einen zweiten Betriebszustand einnehmen können,
umfassend die Schritte:
- Einlesen von Benutzerdaten durch eine Eingabeeinheit (6) in der Telefonanlage (2), wobei die Benutzerdaten personalisierte Zugriffsdaten eines Benutzers umfassen,
- Prüfen der Gültigkeit der Benutzerdaten durch eine Logikeinheit (9) anhand gespeicherter Benutzerdaten in der Telefonanlage (2),
- Auslösen eines Betriebszustandswechsels der Telefonanlage (2) vom ersten in den zweiten Betriebszustand, wenn die eingelesenen Benutzerdaten von der Logikeinheit (9) als gültig bewertet werden,
- Erzeugen von Steuerdaten durch eine Steuereinheit (4) in der Telefonanlage (2) in Abhängigkeit vom Betriebszustandswechsel der Telefonanlage (2) vom ersten Betriebszustand in den zweiten Betriebszustand, wobei die Steuerdaten personalisierte Einstellungen oder Befehlsanweisungen für personalisierte Einstellungen des Computersystems (1) umfassen,
- Austausch der Steuerdaten zwischen der Telefonanlage (2) und dem Computersystem (1) über die Datenschnittstelle (3),
- Einrichten von einem oder mehreren Parametern für den zweiten Betriebszustand des Computersystems (1) durch eine Konfigurationseinheit (5) im Computersystem (1) in Abhängigkeit von den ausgetauschten Steuerdaten,
- Betriebszustandswechsel des Computersystems (1) vom ersten Betriebszustand in den eingerichteten zweiten Betriebszustand.

3. Verfahren nach Anspruch 1 oder 2, wobei die Steuerdaten in Abhängigkeit von den eingelesenen Benutzerdaten erzeugt werden.

4. Verfahren nach Anspruch 1 oder 3, wobei die Parameter für den zweiten Betriebszustand der Telefonanlage (2) wenigstens einen der folgenden Parameter umfassen:
- Energieverbrauch,
- Klingelton,
- Lautstärke,
- Belegung von Kurzwahltasten mit vorbestimmten Rufnummern,
- Rufweiterleitung,
- automatische Anrufbeantworter-Funktion,
- Anrufliste.

5. Verfahren nach Anspruch 2 oder 3, wobei die Parameter für den zweiten Betriebszustand des Computersystems (1) wenigstens einen der folgenden Parameter umfassen:
- Energieverbrauch,
- Zugriffsrechte auf gespeicherte Daten,
- Zugriffsrechte auf Datenschnittstellen,
- Ausführung von Anwendungsprogrammen,
- Erscheinungsbild einer Anzeige in einer Anzeigeeinheit des Computersystems (1),
- Audioausgabe einer Audioausgabeeinheit des Computersystems (1).

6. Verfahren nach einem der Ansprüche 1 bis 5, wobei Geräteinformationen und/oder Informationen über den Aufstellungsort des Computersystems (1) und der Telefonanlage (2) über die Datenschnittstelle (3) zwischen dem Computersystem (1) und der Telefonanlage (2) ausgetauscht werden.

7. Anordnung mit einem Computersystem (1) und einer Telefonanlage (2), wobei das Computersystem (1) über eine Datenschnittstelle (3) mit der Telefonanlage (2) verbunden ist, aufweisend:
- eine Eingabeeinheit (6) zum Einlesen von Benutzerdaten,
- eine Logikeinheit (9) zum Prüfen der Gültigkeit der Benutzerdaten anhand gespeicherter Benutzerdaten,
- eine Steuereinheit (4) zum Erzeugen von Steuerdaten in Abhängigkeit von einem Betriebszustandswechsel der Anordnung, welcher durch die eingelesenen Benutzerdaten ausgelöst werden kann,
- eine Konfigurationseinheit (5) zum Einrichten von einem oder mehreren Parametern in Abhängigkeit von den Steuerdaten, wobei die Konfigurationseinheit (5) von der Steuereinheit (4) angesteuert wird und
wobei
- die Eingabeeinheit (6), die Logikeinheit (9) sowie die Steuereinheit (4) im Computersystem (1) und die Konfigurationseinheit (5) in der Telefonanlage (2) angeordnet sind und zur Durchführung eines Verfahrens nach einem der Ansprüche 1, 3, 4 oder 6 eingerichtet sind oder
- die Eingabeeinheit (6), die Logikeinheit (9) sowie die Steuereinheit (4) in der Telefonanlage (2) und die Konfigurationseinheit (5) im Computersystem (1) angeordnet sind und zur Durchführung eines Verfahrens nach einem der Ansprüche 2, 3, 5 oder 6 eingerichtet sind.

8. Anordnung nach Anspruch 7, wobei das Computersystem (1) zumindest ein Hostsystem (10) und zumindest ein vom Hostsystem (10) verwaltetes Clientsystem (11a, 11b, 11c) umfasst.

9. Anordnung nach Anspruch 7 oder 8, wobei die Telefonanlage (2) zumindest ein Verwaltungssystem (20) und zumindest einen vom Verwaltungssystem (20) verwalteten Telefonapparat (21a, 21b, 21c) umfasst.

## Claims

1. Method for configuring an arrangement having a computer system (1) and a telephone installation (2), wherein the computer system (1) is connected to the telephone installation (2) via a data interface (3) and wherein each of the computer system (1) and the telephone installation (2) can assume at least one first and one second operating state, comprising the steps:
- reading in user data by means of an input unit (6) in the computer system (1), wherein the user data comprise personalized access data of a user,
- checking the validity of the user data by means of a logic unit (9) on the basis of stored user data in the computer system (1),
- triggering a change in operating state of the computer system (1) from the first into the second operating state when the user data read in have been rated as valid by the logic unit (9),
- generating control data by means of a control unit (4) in the computer system (1) in dependence on the change in operating state of the computer system (1) from the first operating state into the second operating state, wherein the control data comprise personalized settings or command instructions for personalized settings of the telephone installation (2),
- exchanging the control data between the computer system (1) and the telephone installation (2) via the data interface (3),
- setting up one or more parameters for the second operating state of the telephone installation (2) by means of a configuration unit (5) in the telephone installation (2) in dependence on the control data exchanged,
- changing the operating state of the telephone installation (2) from the first operating state into the second operating state set up.

2. Method for configuring an arrangement having a computer system (1) and a telephone installation (2), wherein the computer system (1) is connected to the telephone installation (2) via a data interface (3) and wherein each of the computer system (1) and the telephone installation (2) can assume at least one first and one second operating state,
comprising the steps:
- reading in user data by means of an input unit (6) in the telephone installation (2), wherein the user data comprise personalized access data of a user,
- checking the validity of the user data by means of a logic unit (9) on the basis of stored user data in the telephone installation (2),
- triggering a change in operating state of the telephone installation (2) from the first into the second operating state when the user data read in have been rated as valid by the logic unit (9),
- generating control data by means of a control unit (4) in the telephone installation (2) in dependence on the change in operating state of the telephone installation (2) from the first operating state into the second operating state, wherein the control data comprise personalized settings or command instructions for personalized settings of the computer system (1),
- exchanging the control data between the telephone installation (2) and the computer system (1) via the data interface (3),
- setting up one or more parameters for the second operating state of the computer system (1) by means of a configuration unit (5) in the computer system (1) in dependence on the control data exchanged,
- changing the operating state of the computer system (1) from the first operating state into the second operating state set up.

3. Method according to Claim 1 or 2, wherein the control data are generated in dependence on the user data read in.

4. Method according to Claim 1 or 3, wherein the parameters for the second operating state of the telephone installation (2) comprise at least one of the following parameters:
- energy consumption,
- ringing tone,
- loudness,
- allocation of predetermined directory numbers to short code-dialing keys,
- call forwarding,
- automatic answering machine function,
- call list.

5. Method according to Claim 2 or 3, wherein the parameters for the second operating state of the computer system (1) comprise at least one of the following parameters:
- energy consumption,
- access rights to stored data,
- access rights to data interfaces,
- execution of application programs,
- pictogram of a display in a display unit of the computer system (1),
- audio output of an audio output unit of the computer system (1).

6. Method according to one of Claims 1 to 5, wherein device information and/or information about the installation site of the computer system (1) and of the telephone installation (2) is exchanged between the computer system (1) and the telephone installation (2) via the data interface (3).

7. Arrangement having a computer system (1) and a telephone installation (2), wherein the computer system (1) is connected to the telephone installation (2) via a data interface (3), comprising:
- an input unit (6) for reading in user data,
- a logic unit (9) for checking the validity of the user data on the basis of stored user data,
- a control unit (4) for generating control data in dependence on a change in operating state of the arrangement, which can be triggered by the user data read in,
- a configuration unit (5) for setting up one or more parameters in dependence on the control data, wherein the configuration unit (5) is driven by the control unit (4), and
wherein
- the input unit (6), the logic unit (9) and the control unit (4) are arranged in the computer system (1) and the configuration unit (5) is arranged in the telephone installation (2) and said units are set up to carry out a method according to one of Claims 1, 3, 4 or 6, or
- the input unit (6), the logic unit (9) and the control unit (4) are arranged in the telephone installation (2) and the configuration unit (5) is arranged in the computer system (1) and said units are set up to carry out a method according to one of Claims 2, 3, 5 or 6.

8. Arrangement according to Claim 7, wherein the computer system (1) comprises at least one host system (10) and at least one client system (11a, 11b, 11c) managed by the host system (10).

9. Arrangement according to Claim 7 or 8, wherein the telephone installation (2) comprises at least one management system (20) and at least one telephone set (21a, 21b, 21c) managed by the management system (20).

## Revendications

1. Procédé pour la configuration d'un ensemble avec un système d'ordinateur (1) et une installation téléphonique (2), le système d'ordinateur (1) étant relié via une interface de données (3) à l'installation téléphonique (2), et le système d'ordinateur (1) et l'installation téléphonique (2) pouvant respectivement adopter au moins un premier et un deuxième état opérationnel, comprenant les étapes suivantes :
- saisie de données d'utilisateur grâce à une unité de saisie (6) dans le système d'ordinateur (1), les données d'utilisateur comprenant des données d'accès personnalisées d'un utilisateur,
- contrôle de la validité des données d'utilisateur grâce à une unité logique (9) à l'aide de données d'utilisateur enregistrées dans le système d'ordinateur (1),
- déclenchement d'un changement d'état opérationnel du système d'ordinateur (1) du premier au deuxième état opérationnel lorsque les données d'utilisateur saisies sont considérées comme étant valides par l'unité logique (9),
- génération de données de commande par une unité de commande (4) dans le système d'ordinateur (1) en fonction du changement d'état opérationnel du système d'ordinateur (1) du premier état opérationnel au deuxième état opérationnel, les données de commande comprenant des réglages personnalisés ou des instructions de commande pour des réglages personnalisés de l'installation téléphonique (2),
- échange des données de commande entre le système d'ordinateur (1) et l'installation téléphonique (2) via l'interface de données (3),
- établissement d'un ou plusieurs paramètres pour le deuxième état opérationnel de l'installation téléphonique (2) grâce à une unité de configuration (5) dans l'installation téléphonique (2) en fonction des données de commande échangées,
- changement d'état opérationnel de l'installation téléphonique (2) du premier état opérationnel au deuxième état opérationnel établi.

2. Procédé pour la configuration d'un ensemble avec un système d'ordinateur (1) et une installation téléphonique (2), le système d'ordinateur (1) étant relié par l'intermédiaire d'une interface de données (3) à l'installation téléphonique (2), et le système d'ordinateur (1) et l'installation téléphonique (2) pouvant respectivement adopter au moins un premier et un deuxième état opérationnel, comprenant les étapes suivantes :
- saisie de données d'utilisateur grâce à une unité de saisie (6) dans l'installation téléphonique (2), les données d'utilisateur comprenant des données d'accès personnalisées d'un utilisateur,
- contrôle de la validité des données d'utilisateur grâce à une unité logique (9) à l'aide de données d'utilisateur enregistrées dans l'installation téléphonique (2),
- déclenchement d'un changement d'état opérationnel de l'installation téléphonique (2) du premier au deuxième état opérationnel lorsque les données d'utilisateur saisies sont considérées comme étant valides par l'unité logique (9),
- génération de données de commande par une unité de commande (4) dans l'installation téléphonique (2) en fonction du changement d'état opérationnel de l'installation téléphonique (2) du premier état opérationnel au deuxième état opérationnel, les données de commande comprenant des réglages personnalisés ou des instructions de commande pour des réglages personnalisés du système d'ordinateur (1),
- échange des données de commande entre l'installation téléphonique (2) et le système d'ordinateur (1) via l'interface de données (3),
- établissement d'un ou plusieurs paramètres pour le deuxième état opérationnel du système d'ordinateur (1) grâce à une unité de configuration (5) dans le système d'ordinateur (1) en fonction des données de commande échangées,
- changement d'état opérationnel du système d'ordinateur (1) du premier état opérationnel au deuxième état opérationnel établi.

3. Procédé selon la revendication 1 ou 2, dans lequel les données de commande sont générées en fonction des données d'utilisateur saisies.

4. Procédé selon la revendication 1 ou 3, dans lequel les paramètres pour le deuxième état opérationnel de l'installation téléphonique (2) comprennent au moins l'un des paramètres suivants :
- consommation d'énergie,
- sonnerie,
- volume sonore,
- affectation de numéros d'appels prédéfinis à des touches de numérotation rapide,
- transfert d'appels,
- fonction de répondeur automatique,
- liste d'appels.

5. Procédé selon la revendication 2 ou 3, dans lequel les paramètres pour le deuxième état opérationnel du système d'ordinateur (1) comprennent au moins l'un des paramètres suivants :
- consommation d'énergie,
- droits d'accès à des données enregistrées,
- droits d'accès à des interfaces de données,
- exécution de programmes applicatifs,
- aspect d'un affichage dans une unité d'affichage du système d'ordinateur (1),
- sortie audio d'une unité de sortie audio du système d'ordinateur (1).

6. Procédé selon l'une des revendications 1 à 5, dans lequel des informations d'appareil et/ou des informations sur le lieu d'implantation du système d'ordinateur (1) et de l'installation téléphonique (2) sont échangées via l'interface de données (3) entre le système d'ordinateur (1) et l'installation téléphonique (2).

7. Ensemble avec un système d'ordinateur (1) et une installation téléphonique (2), le système d'ordinateur (1) étant relié via une interface de données (3) à l'installation téléphonique (2), présentant :
- une unité de saisie (6) pour la saisie de données d'utilisateur,
- une unité logique (9) pour le contrôle de la validité des données d'utilisateur à l'aide de données d'utilisateur enregistrées,
- une unité de commande (4) pour la génération de données de commande en fonction d'un changement d'état opérationnel de l'ensemble, lequel peut être déclenché par les données d'utilisateur saisies,
- une unité de configuration (5) pour l'établissement d'un ou plusieurs paramètres en fonction des données de commande, l'unité de configuration (5) étant commandée par l'unité de commande (4) et
dans lequel
- l'unité de saisie (6), l'unité logique (9) ainsi que l'unité de commande (4) sont disposées dans le système d'ordinateur (1) et l'unité de configuration (5) dans l'installation téléphonique (2) et sont étudiées pour la mise en oeuvre d'un procédé selon l'une des revendications 1, 3, 4 ou 6 ou
- l'unité de saisie (6), l'unité logique (9) ainsi que l'unité de commande (4) sont disposées dans l'installation téléphonique (2) et l'unité de configuration (5) dans le système d'ordinateur (1) et sont étudiées pour la mise en oeuvre d'un procédé selon l'une des revendications 2, 3, 5 ou 6.

8. Ensemble selon la revendication 7, dans lequel le système d'ordinateur (1) comprend au moins un système hôte (10) et au moins un système client (11a, 11b, 11c) géré par le système hôte (10).

9. Ensemble selon la revendication 7 ou 8, dans lequel l'installation téléphonique (2) comprend au moins un système de gestion (20) et au moins un appareil téléphonique (21a, 21b, 21c) géré par le système de gestion (20).
